# EUROPÄISCHE PATENTANMELDUNG

(11) **EP 1 444 912 A1**
(43) Veröffentlichungstag der Anmeldung: **11.08.2004**
(21) Anmeldenummer: 03025952.7
(22) Anmeldetag: 13.11.2003
(51) Int. Cl.: A44B 17/00, F16B 21/08

(54) **Lösbare Schnappverbindung**

(30) Priorität: 05.02.2003 AT 1782003
(71) Anmelder: Sikora, Günter, 4400 Steyr (AT)
(72) Erfinder: Sikora, Günter, 4400 Steyr (AT); Sikora, Gerhard, 4400 Steyr (AT)
(74) Vertreter: Torggler, Paul Norbert, Dr.

(57) **Zusammenfassung**

Lösbare Schnappverbindung (1) zwischen einem elastisch federnden Teil (2) und einem vorzugsweise starren Teil (3), mit einem Rastelement (4), das einen Schaft (6) und eine Rastspitze (5) aufweist, und einer Rastaufnahme (7), wobei das Rastelement (4) zumindest teilweise in die Rastaufnahme (7) eingreift, und das Rastelement (4) eine entlang seines Schaftes (6) verschiebbar gelagerte Hülse (8) zum Lösen der Schnappverbindung (1) aufweist.

## Beschreibung

Die Erfindung betrifft eine lösbare Schnappverbindung zwischen einem elastisch federnden und einem vorzugsweise starren Teil, mit einem Rastelement, das einen Schaft und eine Rastspitze aufweist, und einer Rastaufnahme, wobei das Rastelement zumindest teilweise in die Rastaufnahme eingreift.

Aus der DE 92 17 185 U1 ist eine Vorrichtung zum Befestigen eines Gerätes an einer Wand bekannt, bei der ein Montagebolzen in eine elastisch federnde Aufnahme eines zu montierenden Gegenstandes eingreift. Der gezeigte Montagebolzen weist einen Abschnitt mit verringertem Durchmesser auf, an dem federnde Schenkel der Aufnahme eingreifen. Das Lösen der Schnappverbindung erfolgt bei der gezeigten Vorrichtung dadurch, dass der Bolzen gegen die Klemmkraft der federnden Schenkel aus der Aufnahme herausgezogen wird. Als nachteilig an dieser bekannten Schnappeinrichtung hat es sich herausgestellt, dass eine vertikale Verwendung der Schnappverbindung, wie dies beispielsweise zur Montage von Gegenständen an der Decke wünschenswert ist, in der Praxis nicht geeignet ist, da in der Regel durch das Eigengewicht des an der Decke montierten Gegenstandes die Schnappverbindung gegen die Klemmkraft der federnden Schenkel gelöst werden würde.

Weiters ist aus der US 5,327,619 eine Schnappverbindung zwischen einem federnden Rastelement und einer Rastaufnahme bekannt, bei der die Rastaufnahme Mittel zum Lösen der Schnappverbindung aufweist, wobei die Mittel zum Lösen der Schnappverbindung derart ausgebildet sind, dass das federnde Rastelement und die Rastaufnahme außer Eingriff bringbar sind. Um eine derartige Schnappverbindung zu lösen, müssen also sowohl das Rastelement als auch die in der Rastaufnahme angeordneten Mittel zum Lösen der Schnappverbindung zugänglich bzw. betätigbar sein, was neben der umständlichen Handhabung eine vertikale Verwendung der Schnappverbindung beinahe ausschließt.

Ausgehend von diesem Stand der Technik ist es Aufgabe der Verbindung, eine neuartige Schnappverbindung zu schaffen, die unter Vermeidung der vorbeschriebenen Nachteile in einfacher Weise gelöst werden kann.

Erfindungsgemäß wird das dadurch erreicht, dass das Rastelement eine entlang seines Schaftes verschiebbar gelagerte Hülse zum Lösen der Schnappverbindung aufweist. Das bedeutet, dass die verschiebbare Hülse zum Lösen der Schnappverbindung in eine den federnden Teil gegenüber dem starren Teil freigebende Stellung bringbar ist und in dieser Stellung verbleibt, bis das Rastelement und die Rastaufnahme außer Eingriff sind.
Bei der erfindungsgemäßen Schnappverbindung wird also das Rastelement, das einen Schaft und eine Rastspitze aufweist, in die Rastaufnahme eingeführt, bis die Schnappverbindung hergestellt ist. Zum Lösen dieser Schnappverbindung muss in weiterer Folge lediglich das Rastelement weiter in die Rastaufnahme gedrückt werden, um auf diese Weise die Rastspitze außer Eingriff mit der Rastaufnahme zu bringen. Durch die Verschiebbarkeit der Hülse wird gewährleistet, dass die Hülse in Ihrer Lösestellung, das ist die Stellung in der sich die Rastspitze außer Eingriff mit der Rastaufnahme befindet, verbleibt, bis das Rastelement und die Rastaufnahme außer Eingriff bzw. gelöst sind.

Gemäß einer Ausführungsvariante der Erfindung ist vorgesehen, dass der eine federnde Teil der Schnappverbindung von der Rastaufnahme gebildet ist, während der andere, vorzugsweise starre Teil der Schnappverbindung vom Rastelement gebildet ist, wobei gemäß einer bevorzugten Ausführungsform nach die Rastaufnahme zumindest einen federnden Schenkel, der zum vorzugsweise formschlüssigen Umgreifen der Rastspitze des Rastelementes ausgebildet ist, aufweist.

Dadurch, dass der federnde Teil der Schnappverbindung von der Rastaufnahme gebildet ist, ist es möglich das Rastelement, insbesondere die Rastspitze, starr, beispielsweise in Form eines Bolzens, auszubilden. Dadurch können Beschädigungen des Rastelements, das beispielsweise aus Metall, Holz, Kunststoff oder ähnlichem hergestellt sein kann, weitestgehend vermieden werden. Ist der fehlende Schenkel zum formschlüssigen Umgreifen der Rastspitze ausgebildet, wird dadurch insbesondere bei einer vertikalen Verwendung der Schnappverbindung verhindert, dass das Rastelement bzw. ein mit dem Rastelement verbundener zu haltender Gegenstand infolge seines Gewichts die Schnappverbindung gegen die Klemmkraft der federnden Schenkel ungewollt löst.

Um sicher zustellen, dass die Hülse bei einem weiteren Hineindrücken des Rastelementes in die Rastaufnahme in eine den federnden Teil gegenüber dem starren Teil freigebende Stellung gebracht wird und nicht entlang des Schaftes zurückrutscht, ist gemäß einem weiteren Ausführungsbeispiel der Erfindung vorgesehen, dass der Schaft des Rastelementes eine vorzugsweise ringförmige, flanschartige Erweiterung aufweist, wobei die Hülse zwischen dieser flanschartigen Erweiterung und der Rastspitze verschiebbar am Schaft angeordnet ist. Dabei hat es sich als besonders vorteilhaft erwiesen, wenn die Rastaufnahme wenigstens zwei federnde, vorzugsweise im wesentlichen I-förmige Schenkel aufweist, deren freie Enden zum Eingriff zwischen der Rastspitze und der flanschartigen Erweiterung ausgebildet sind.
Ist die Hülse auf ihrer der Rastspitze zugewandten Seite konisch verjüngt ausgebildet und/oder ist (sind) das (die) freie(n) Ende(n) des (der) Schenkel(s) der Rastaufnahme abgeschrägt, kann die Hülse leichter in Eingriff mit dem federnden Teil der Rastaufnahme gebracht werden. Aus demselben Grund ist es vorteilhaft, wenn die Rastspitze konisch verjüngt, abgerundet oder halbkugelförmig ausgebildet ist.

Eine besonders einfache Ausführungsform der Erfindung sieht vor, dass die Rastaufnahme als Formrohr, vorzugsweise mit einer rechteckigen Querschnittsfläche, ausgebildet ist und wenigstens eine in Längsrichtung verlaufende Durchtrittsöffnung für das (die) Rastelement(e) aufweist, wobei die Wandung des Rohres auf wenigstens einer Seite der Durchtrittsöffnung mehrere zur Durchtrittsöffnung im wesentlichen normal verlaufende Durchbrechungen, die bis zur Durchtrittsöffnung reichen, aufweist. Wird also die Schnappverbindung zur Befestigung von beispielsweise Kleiderbügeln oder Haken oder zur Montage von Gebrauchsgegenständen wie Werkzeug oder Haushaltsgeräten verwendet, muss nur das als Rastaufnahmen dienende Formrohr an der Wand, der Decke oder anderweitig befestigt werden, sodass in weiterer Folge die zu haltenden Gegenstände, von denen jeder für sich in der Regel ein Rastelement aufweist, durch einfaches Hineindrücken in die Durchtrittsöffnung des Formrohres befestigt werden können.

Wenn die Rastaufnahme in einem Gehäuse mit einer Durchtrittsöffnung für das Rastelement gelagert ist und sich die federnden Schenkeln mit ihren die Rastspitze des Rastelementes umgreifenden Enden am Gehäuse abstützen, kann dadurch verhindert werden, dass sich die Rastelemente - auch wenn sie mit einem Gegenstand von größerem Gewicht, beispielsweise einem mit einem Kleidungsstück versehenen Kleiderhaken verbunden sind - selbsttätig aus der Rastaufnahme lösen. Als besonders vorteilhaft hat es sich dabei herausgestellt, wenn das Gehäuse in einem Formrohr mit einer in Längsrichtung verlaufenden Durchtrittsöffnung verschiebbar angeordnet ist, wodurch die mittels der Schnappverbindung gehaltenen Gegenstände mittels des Gehäuses im Formrohr frei verschiebbar sind. Eine derartige Ausgestaltung hat sich insbesondere bei der Verwendung der Erfindung bei Garderobenständern als nützlich erwiesen.

Gemäß einer weiteren Ausführungsvariante der Erfindung ist vorgesehen, dass der eine, federnde Teil der Schnappverbindung vom Rastelement gebildet ist, während der andere, vorzugsweise starre Teil der Schnappverbindung von der Rastaufnahme gebildet ist. Bei dieser Variante, bei der das Rastelement vorteilhafterweise wenigstens zwei Rastsegmente aufweist, die radialfedernd ausgebildet sind, kann auf eine besondere Ausgestaltung der Rastaufnahme zur Gänze verzichtet werden. Gemäß einem bevorzugten Ausführungsbeispiel der Erfindung genügt es, wenn die Rastaufnahme von einer Bohrung im vorzugsweise starren Teil der Schnappverbindung, beispielsweise in einer Holz-, einer Metall-, einer Kunststoffplatte oder ähnlichem, gebildet ist.

Ein alternatives Ausführungsbeispiel sieht vor, dass die Rastaufnahme als Formrohr ausgebildet ist und wenigstens eine Bohrungen und/oder wenigstens eine in Längsrichtung verlaufende Durchtrittsöffnung für ein federndes Rastelement aufweist, wodurch eine Verschiebbarkeit der Rastelemente in der Rastaufnahme gegeben ist.

Um die radiale Bewegbarkeit der Rastsegmente, die sowohl einwärts, das heißt zur Längsmittelachse des Rastelementes, als auch auswärts - nach dem Durchtritt der Rastspitze durch die Rastaufnahme - gegeben sein muss, sicher zu stellen, sieht ein weiteres Ausführungsbeispiel der Erfindung vor, dass wenigstens ein Rastsegment einen Teil der Rastspitze sowie einen Teil des Schaftes des Rastelementes umfasst. Eine einfache Konstruktion ergibt sich, wenn auch die Hülse wenigstens zwei Mantelsegmente aufweist, die radial federnd ausgebildet sind, wobei die Schnappverbindung besonders einfach gelöst werden kann, wenn die Rastsegmente des Rastelementes und die Mantelsegmente der Hülse zum vorzugsweise formschlüssigen Eingriff miteinander ausgebildet sind.

Ein sicherer Eingriff des Rastelementes mit der Rastaufnahme kann erreicht werden, wenn die freien Enden der Rastsegmente des Rastelementes und/oder die freien Enden der Mantelsegmente der Hülse hakenförmig ausgebildet sind. Es wird als in einem ersten Schritt die hakenförmig ausgebildete Rastspitze mit der Rastaufnahme in Eingriff gebracht. Zum Lösen der Schnappverbindung wird dann in einem weiteren Schritt die Hülse bzw. zumindest die hakenförmig ausgebildeten Mantelsegmente der Hülse mit der Rastaufnahme in Eingriff gebracht, wodurch gleichzeitig die Rastsegmente des Rastelementes außer Eingriff mit der Rastaufnahme gebracht werden. Beim Herausziehen des Rastelementes aus der Rastaufnahme greifen dann die Mantelsegmente der Hülse und die hakenförmigen Rastsegmente des Rastelementes formschlüssig ineinander, wodurch ein neuerlicher Eingriff der Rastspitze mit der Rastaufnahme verhindert wird.

Alternativ wäre es auch denkbar, die äußere Umfangsfläche der Hülse zum formschlüssigen Eingriff mit der Rastaufnahme auszubilden, sodass zum Lösen der Schnappverbindung die Hülse, die in diesem Fall nicht unbedingt über federnde Mantelsegmente verfügen muss, nur zu einem geringen Teil in die Rastaufnahme eingeführt werden muss.

Weitere Vorteile und Einzelheiten der erfindungsgemäßen Schnappverbindung werden im Folgenden unter Bezugnahme die in der Zeichnung dargestellten Figuren näher erläutert.

Darin zeigen:
- Fig. 1: eine gelöste Schnappverbindung mit einer federnd ausgebildeten Rastaufnahme und einem starren Rastelement,
- Fig. 2: einen Querschnitt durch ein Formrohr in dem ein Gehäuse angeordnet ist, wobei im Gehäuse eine federnde Rastaufnahme, die ein starres Rasteelement formschlüssig umgreift, angeordnet ist,
- Fig. 3: eine Explosionsdarstellung der in Fig. 2 gezeigten Rastverbindung,
- Fig. 4: eine Rastaufnahme, die als Formrohr ausgebildet ist,
- Fig. 5: ein Gehäuse für die Aufnahme einer Rastaufnahme,
- Fig. 6a bis 6f: die einzelnen Schritte zum Herstellen und Lösen einer Schnappverbindung zwischen einer federnd ausgebildeten Rastaufnahme, die in einem Gehäuse angeordnet ist, und einem starren Rastelement,
- Fig. 7: eine weitere Ausführungsvariante der Erfindung mit einer starren Rastaufnahme in einem federnd ausgebildeten Rastelement,
- Fig. 8: eine Explosionszeichnung der Erfindung nach Fig. 7,
- Fig. 9a bis 9h: die Schritte zur Herstellung bzw. zum Lösen der erfindungsgemäßen Schnappverbindung nach Fig. 7
- Fig. 10: ein Ausführungsbeispiel für eine als Formrohr ausgebildete starre Rastaufnahme.

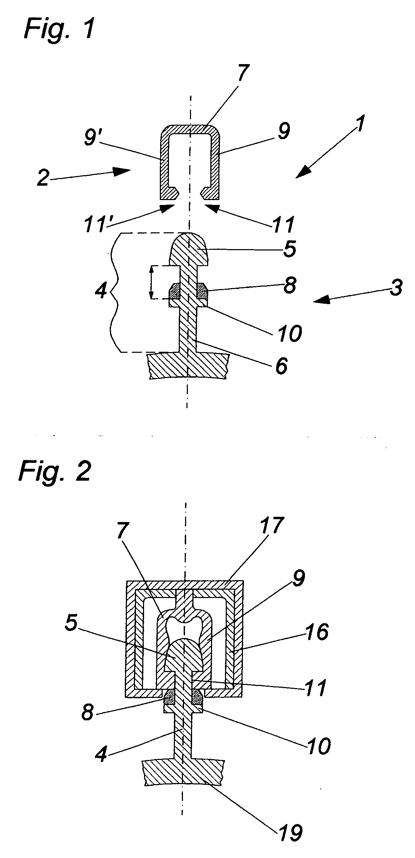

Bei der in Fig. 1 gezeigten Schnappverbindung 1 wird der federnde Teil 2 von der Rastaufnahme 7 gebildet. Die Rastaufnahme 7, die beispielsweise aus Metall oder Kunststoff hergestellt sein kann, ist als u-förmiger Bügel ausgebildet der zwei federnde Schenkel 9, 9' aufweist. Die freien Enden 11, 11' der federnden Schenkel 9, 9' weisen an ihren einander zugewandten Innenseiten zwei im Winkel zueinander stehende Keilflächen auf und sind zum formschlüssigen Umgreifen der Rastspitze 5 des Rastelementes 4 ausgebildet. Beim gezeigten Ausführungsbeispiel stellt das Rastelement 4 den im wesentlichen starren Teil 3 der Schnappverbindung 1 dar. Im Anschluss an die Rastspitze 5 weist das Rastelement 4 einen Schaft 6 auf, an dem eine Hülse 8 verschiebbar gelagert ist. Weiters ist am Schaft 6 eine flanschartige Erweiterung 10 angeordnet, die der Hülse 8 als Anschlag dient. Die Hülse 8 ist auf ihrer der Rastspitze 5 zugewandten Seite konisch verjüngt, wodurch die freien Enden 11, 11' der federnden Schenkel 9, 9' beim Hineindrücken des Rastelementes 4 in die Rastaufnahme 7 leichter auf die Hülse 8 gleiten. Aus dem gleichen Grund ist die Rastspitze 5 halbkugelförmig ausgebildet.

In Fig. 2, bei dem gleiche Teile gleich benannt sind, ist eine aufrechte Schnappverbindung gezeigt, wobei die Rastaufnahme 7 in einem Gehäuse 16 angeordnet ist. Das Gehäuse 16 seinerseits ist wiederum in einem Formrohr 17 verschiebbar gelagert, wobei sich die federnden Schenkel 9, 9' der Rastaufnahme am Formrohr 17 abstützen. Dadurch wird verhindert, dass sich das Rastelement 4, welches beispielsweise mit einem Kleiderbügel 19 verbunden ist, ungewollt aus der Rastaufnahme 7 löst. Ein derartiges Lösen wird auch dadurch verhindert, dass die federnden Schenkeln 9, 9' zum formschlüssigen Umgreifen der Rastspitze 5 ausgebildet sind, wobei die freien Enden 11, 11' der federnden Schenkel 9, 9' die Rastspitze 5 umgreifend zwischen der Hülse 8 und der Rastspitze 5 am Schaft 6 des Rastelementes 4 angreifen.

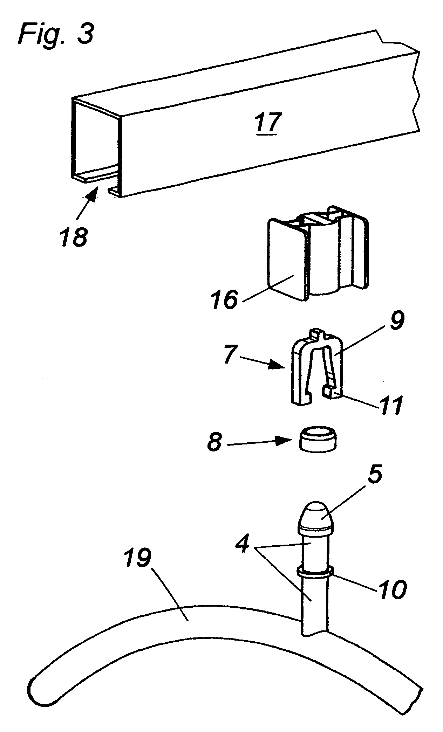

Die Fig. 3 zeigt eine Explosionszeichnung des in Fig. 2 dargestellten Ausführungsbeispieles, wobei zu bemerken ist, dass die Hülse 8 zwischen der Rastspitze 5 und der flanschartigen Erweiterung 10 am Schaft 6 des Rastelementes 4 angeordnet wird. Durch die Anordnung der Rastaufnahme 7 in dem Gehäuse 16, welches im Formrohr 17 verschiebbar gelagert ist, wird erreicht, dass der mit dem Rastelement 4 verbundene Kleiderhaken 19 im Formrohr 17 in Längsrichtung verschoben werden kann.

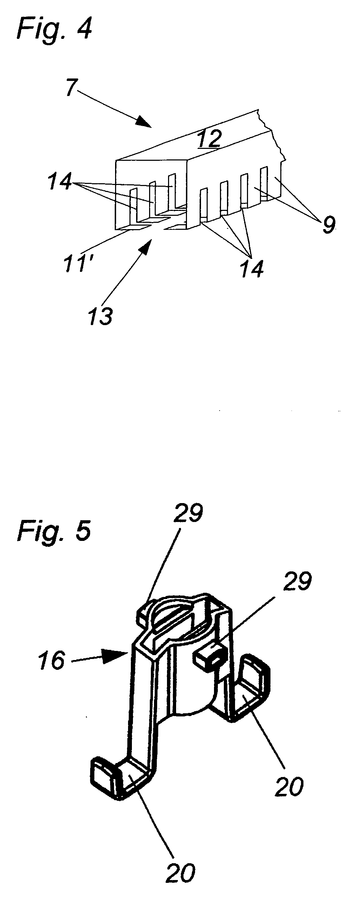

Ein weiteres Ausführungsbeispiel bei dem die Rastaufnahme 7 von einem Formrohr 12 gebildet wird, wird in Fig. 4 gezeigt. Bei diesem Ausführungsbeispiel weist das Formrohr 12 eine in Längsrichtung angeordnete Durchtrittsöffnung 13 auf. Durch diese Durchtrittsöffnung 13 können nun ein oder mehrere Rastelemente in die Rastaufnahme 7 eingeführt werden, wobei durch Unterbrechungen 14, die in der Seitenwandung des Formrohrs 12 angeordnet sind, federnde Schenkel 9 ausgebildet werden. Es kann also im Gegensatz zu bei dem in Fig. 3 dargestellten Ausführungsbeispiel, bei dem vor dem Einführen eines Rastelementes 4 in die Durchtrittsöffnung 18 überprüft werden muss, wo sich ein Gehäuse 16 mit einer Rastaufnahme 7 befindet, das Rastelement 4, an dem beispielsweise ein Kleiderhaken oder Gebrauchsgegenstände wie Werkzeug, Haushaltsgeräte oder dergleichen angeordnet sind, an einer beliebigen Stelle in die als Formrohr 12 ausgebildete Rastaufnahme 7 eingesteckt werden. Durch die Unterbrechungen werden in den Seitenwandungen des Formrohrs 12 nicht nur federnde Schenkeln 9 ausgebildet, es wird auch gleichzeitig verhindert, dass durch das Auseinanderspreitzen der Seitenwandungen beim Einführen eines Rastelementes 4 in das Formrohr 12 ein bereits in der Rastaufnahme 7 befindliches Rastelement 4 außer Eingriff mit der Rastaufnahme 7 gebracht wird.

Fig. 5 zeigt ein weiteres Ausführungsbeispiel für ein Gehäuse 16 zur Aufnahme einer Rastaufnahme 7, das neben Führungszapfen 29, die ein sicheres Gleiten des Gehäuses 16 im Formrohr 17 ermöglichen, über Zusatzhaken 20 verfügt, dargestellt.

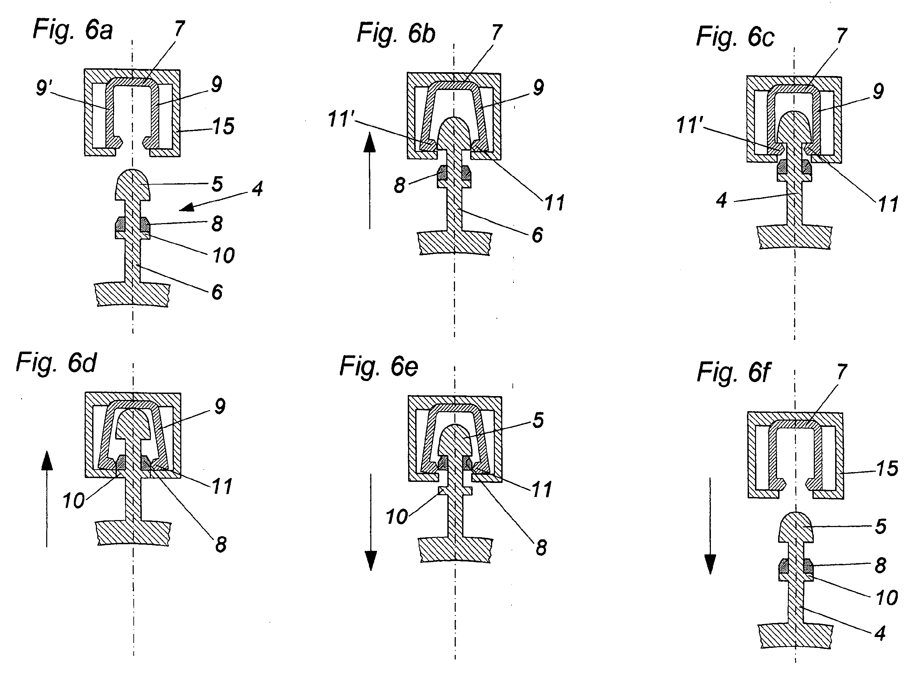

Die Figuren 6a bis 6f zeigen die einzelnen Schritte zum Herstellen und Lösen einer erfindungsgemäßen Schnappverbindung. In Fig. 6a ist die Rastaufnahme 7 in einem Gehäuse 15 angeordnet, wobei sich die federnden Schenkel 9, 9' am Gehäuse 15 abstützen. Die Rastaufnahme 4 wird in Pfeilrichtung in diese Rastaufnahme 7 gedrückt, wodurch, wie aus Fig. 6b ersichtlich, die beiden federnden Schenkel von der Rastspitze auseinandergespreizt werden. Die Hülse 8 ist zu diesem Zeitpunkt noch frei beweglich und liegt an der flanschartigen Erweiterung 10 des Schaftes 6 an. In Fig. 6c ist die Schnappverbindung hergestellt, wobei die Rastspitze 5 von den freien Enden 11, 11' der federnden Schenkel hintergriffen ist, wodurch ein Lösen des Rastelementes 4 aus der Rastaufnahme 7, zusammen mit Umstand, dass sich die federnden Schenkeln 9, 9' am Gehäuse 15 abstützen, sicher verhindert werden kann.

Zum Lösen der Schnappverbindung wird, wie in Fig. 6d dargestellt, das Rastelement 4 weiter in die Aufnahme 7 gedrückt, wodurch die federnden Schenkeln 9 von der Hülse 8 auseinandergespreizt werden und an der Umfangsfläche der Hülse 8 angreifen. Beim Herausziehen des Rastelementes 4 aus der Rastaufnahme 7 (Fig. 6e) bildet die Hülse 8 weiterhin den Anschlag für die federnden Schenkel 9. Da die Hülse 8 am Schaft 6 des Rastelementes 4 verschiebbar gelagert ist, kann das Rastelement 4 zurückgezogen werden, bis die Hülse 8 an der Rastspitze 5 anschlägt, wodurch verhindert wird, dass die freien Enden 11 der federnden Schenkeln die Rastspitze 5 umgreifend am Schaft 6 des Rastelementes 4 angreifen können. Bei einem weiteren Herausziehen des Rastelementes 4 gleiten die freien Enden des federnden Schenkels 9 zuerst über die Umfangsfläche der Hülse 8 und in weitere Folge über die Rastspitze 5 bis, wie in Fig. 6f dargestellt, die Schnappverbindung wieder gelöst ist.

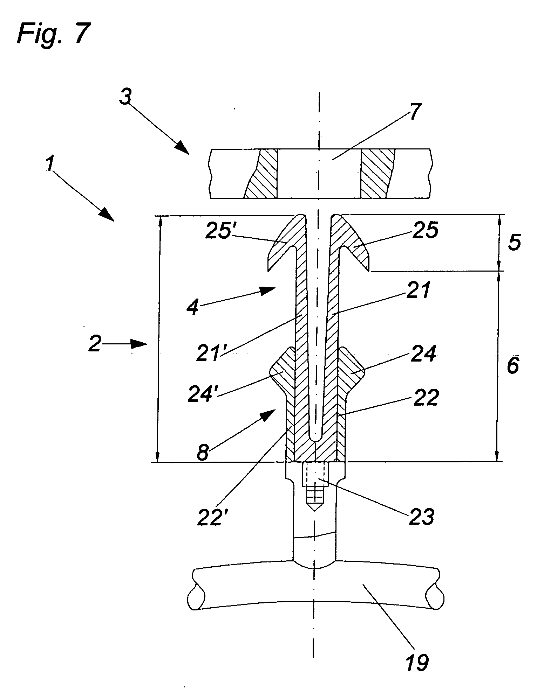

Bei einer weiteren, in Fig. 7 gezeigten Ausführungsvariante der erfindungsgemäßen Schnappverbindung 1, wird der starre Teil 3 von der Rastaufnahme 7 gebildet, während der federnde Teil 2 vom Rastelement 4 gebildet ist. Das Rastelement 4 weist mehrere Rastsegmente 21, 21' auf, von denen jedes einen Teil der Rastspitze 5 und einen Teil des Schaftes 6 des Rastelementes 4 umfasst. Die freien Enden 25, 25' der Rastsegmente 21, 21' sind dabei hakenförmig ausgebildet. Am Schaft des Rastelements 4 ist verschiebbar eine Hülse 8 gelagert, die über Mantelsegmente 22, 22' verfügt, deren freien Enden 24, 24' ebenfalls hakenförmig ausgebildet sind, wobei die Außenseiten der freien Enden 24, 24' im Winkel zueinander stehende Keilflächen aufweisen. Auf seiner der Rastaufnahme 7 abgewandten Seite ist das Rastelement 4 mittels eines Gewindebolzens 23 mit einem Kleiderhaken 19 verbunden. Anstelle des Kleiderhakens 19 wäre es auch möglich Gebrauchsgegenstände, wie Werkzeug oder Haushaltsartikel mit dem Rastelement 4 zu verbinden.

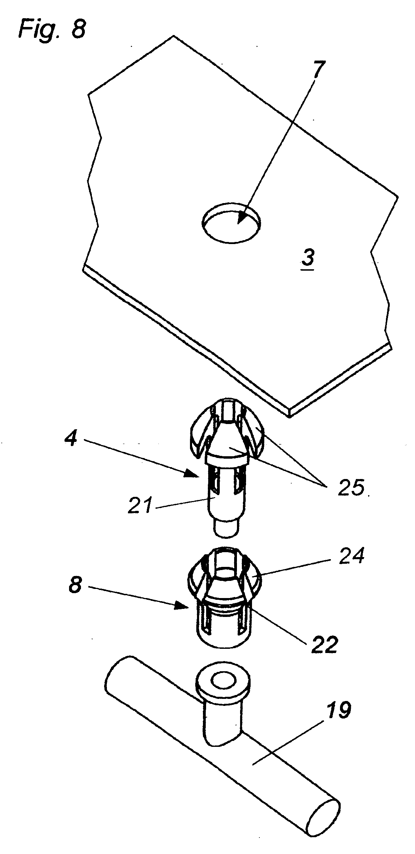

Fig. 8 zeigt eine Explosionsdarstellung der in Fig. 7 gezeigten Ausführungsform der Erfindung, aus der ersichtlich ist, dass die Rastaufnahme 7 von einer Bohrung im starren Teil 3 der Schnappverbindung 1 gebildet wird. Dieser starre Teil 3 kann beispielsweise von einer Holz-, Metall-, Kunststoffplatte oder ähnlichem gebildet sein, wodurch im Gegensatz zum bisher bekannten Stand der Technik ein mit einem erfindungsgemäßen Rastelement verbundener Gegenstandes in einfachster Weise an beinahe jeder beliebigen Öffnung befestigbar ist.

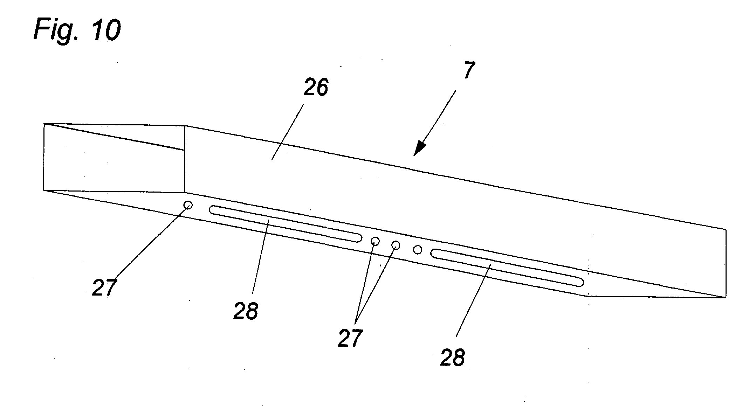

Eine alternative Ausführungsform der erfindungsgemäßen Rastaufnahme 7 wird in Fig. 10 dargestellt. Dabei wird die Rastaufnahme 7 von einem Formrohr 26 gebildet, welches mehrere Bohrungen 27 und/oder in Längsrichtung verlaufende Durchtrittsöffnungen 26 für Rastelemente aufweist.

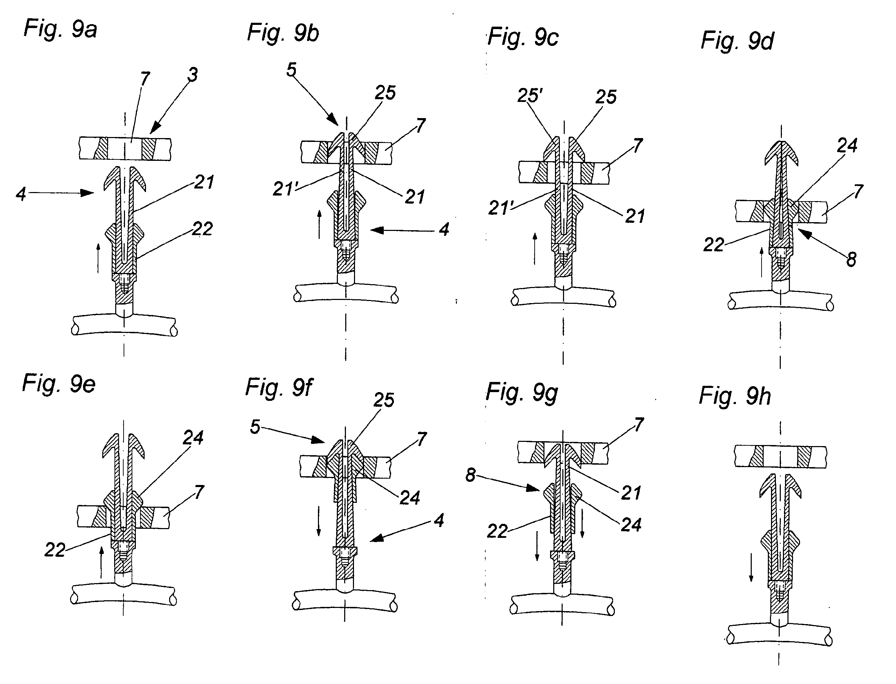

In den Fig. 9a bis 9h wird der Vorgang zur Herstellung bzw. zum Lösen der erfindungsgemäßen Stammverbindung schrittweise gezeigt. Ausgehende von Fig. 9a, bei der die Rastaufnahme 7 und das Rastelement 4 außer Eingriff sind, wird das Rastelement 4 in Pfeilrichtung in die Rastaufnahme 7 gedrückt. Beim Eintritt der Rastspitze 5 in die Rastaufnahme 7 (Fig. 9b) werden die radial bewegbaren Rastsegmente 21, 21' des Rastelementes 4 zusammen, das heißt in Richtung der Längsachse des Rastelementes 4 gedrückt, bis - wie in Fig. 9c gezeigt - die hakenförmigen freien Enden 25, 25' des Rastelementes 4 zur Gänze durch die Rastaufnahme 7 durchgetreten sind und in Folge der radialen Auswärtsbewegung der Rastsegmente 21, 21' mit der Rastaufnahme 7 in Eingriff treten.

Zum Lösen der Schnappverbindung (Fig. 9d) wird das Rastelement in Pfeilrichtung weiter in die Rastaufnahme 7 gedrückt, bis die freien Enden 24 der Mantelsegmente 22 der Hülse 8 ebenfalls durch die Rastaufnahme 7 durchgetreten sind (Fig. 9e). Zum Lösen der Schnappverbindung (Fig. 9f) wird das Rastelement 4 in Pfeilrichtung aus der Rastaufnahme 7 herausgezogen. Dabei verschiebt sich die Hülse 8 infolge der Klemmwirkung der feien Enden 24 der federnden Mantelsegmente 22 in Richtung der Rastspitze 5, bis die hakenförmigen freien Enden 25, 25' der Rastsegmente 21, 21' des Rastelementes 4 mit den freien Enden 24 der Mantelsegmente 22 der Hülse 8 formschlüssig ineinander greifen, wodurch, wie in den Fig. 9f und 9g gezeigt, das Rastelement 4 aus der Rastaufnahme 7 herausgezogen werden kann, ohne dass sich die hakenförmigen freien Enden 25, 25' des Rastelementes 4 an der Rastaufnahme 7 einhaken bzw. mit dieser in Eingriff gelangen.

Weiters wird zum in Fig. 9g gezeigten Zeitpunkt die Klemmwirkung zwischen der Hülse 8 und den Rastsegmenten 21 infolge der radialen Auswärtsbewegung der Mantelsegmente 22 aufgehoben, sodass die Hülse 8 entlang des Schaftes des Rastelementes 4 zurückgleitet, wodurch die in Fig. 9a gezeigte Ausgangsstellung wieder erreicht wird.

## Patentansprüche

1. Lösbare Schnappverbindung zwischen einem elastisch federnden und einem vorzugsweise starren Teil, mit einem Rastelement, das einen Schaft und eine Rastspitze aufweist, und einer Rastaufnahme, wobei das Rastelement zumindest teilweise in die Rastaufnahme eingreift, **dadurch gekennzeichnet, dass** das Rastelement (4) eine entlang seines Schaftes (6) verschiebbar gelagerte Hülse (8) zum Lösen der Schnappverbindung (1) aufweist.

2. Schnappverbindung nach Anspruch 1, **dadurch gekennzeichnet, dass** die verschiebbare Hülse (8) zum Lösen der Schnappverbindung (1) in eine den federnden Teil (2) gegenüber dem starren Teil (3) freigebende Stellung bringbar ist und in dieser Stellung verbleibt, bis das Rastelement (4) und die Rastaufnahme (7) außer Eingriff sind.

3. Schnappverbindung nach Anspruch 1 oder Anspruch 2, **dadurch gekennzeichnet, dass** der eine, federnde Teil (2) der Schnappverbindung (1) von der Rastaufnahme (7) gebildet ist, während der andere, vorzugsweise starre Teil (3) der Schnappverbindung (1) vom Rastelement (4) gebildet ist.

4. Schnappverbindung nach Anspruch 3, **dadurch gekennzeichnet, dass** die Rastaufnahme (7) zumindest einen federnden Schenkel (9), der zum vorzugsweise formschlüssigen Umgreifen der Rastspitze (5) des Rastelementes (4) ausgebildet ist, aufweist.

5. Schnappverbindung nach Anspruch 3 oder Anspruch 4, **dadurch gekennzeichnet, dass** der Schaft (6) des Rastelementes (4) eine vorzugsweise ringförmige, flanschartige Erweiterung (10) aufweist, wobei die Hülse (8) zwischen dieser flanschartigen Erweiterung (10) und der Rastspitze (5) verschiebbar am Schaft (6) angeordnet ist.

6. Schnappverbindung nach Anspruch 5, **dadurch gekennzeichnet, dass** die Rastaufnahme (7) wenigstens zwei federnde, vorzugsweise im wesentlichen I-förmige Schenkel (9, 9') aufweist, deren freie Enden (11, 11') zum Eingriff zwischen der Rastspitze (5) und der flanschartigen Erweiterung (10) ausgebildet sind.

7. Schnappverbindung nach einem der Ansprüche 3 bis 5, **dadurch gekennzeichnet, dass** die Hülse (8) auf ihrer der Rastspitze (5) zugewandten Seite konisch verjüngt ausgebildet ist und/oder das (die) freie(n) Ende(n) (11, 11') des (der) Schenkel(s) (9, 9') der Rastaufnahme (7) abgeschrägt ist (sind).

8. Schnappverbindung nach einem der Ansprüche 3 bis 7, **dadurch gekennzeichnet, dass** die Rastaufnahme (7) als Formrohr (12), vorzugsweise mit einer rechteckigen Querschnittsfläche, ausgebildet ist und wenigstens eine in Längsrichtung verlaufende Durchtrittsöffnung (13) für das (die) Rastelement(e) (4) aufweist, wobei die Wandung des Rohres (12) auf wenigstens einer Seite der Durchtrittsöffnung mehrere, zur Durchtrittsöffnung im wesentlichen normal verlaufende Durchbrechungen (14), die bis zur Durchtrittsöffnung reichen, aufweist.

9. Schnappverbindung nach einem der Ansprüche 3 bis 8, **dadurch gekennzeichnet, dass** die Rastaufnahme (7) in einem Gehäuse (15) mit einer Durchtrittsöffnung für das Rastelement (4) gelagert ist, wobei sich der/die federnde(n) Schenkel(n) (9, 9') mit seinem (ihren) die Rastspitze (5) des Rastelementes (4) umgreifenden Ende(n) (11, 11') am Gehäuse (15) abstützt bzw. abstützen.

10. Schnappverbindung nach Anspruch 9, **dadurch gekennzeichnet, dass** das Gehäuse (15, 16) in einem Formrohr (17) mit einer in Längsrichtung verlaufenden Durchtrittsöffnung (17) verschiebbar angeordnet ist.

11. Schnappverbindung nach Anspruch 1 oder 2, **dadurch gekennzeichnet, dass** der eine, federnde Teil (2) der Schnappverbindung (1) vom Rastelement (4) gebildet ist, während der andere, vorzugsweise starre Teil (3) der Schnappverbindung (1) von der Rastaufnahme (7) gebildet ist.

12. Schnappverbindung nach Anspruch 11, **dadurch gekennzeichnet, dass** das Rastelement (4) wenigstens zwei Rastsegmente (21, 21') aufweist, die radial federnd ausgebildet sind.

13. Schnappverbindung nach Anspruch 11 oder Anspruch 13, **dadurch gekennzeichnet, dass** wenigstens ein Rastsegment (21, 21') einen Teil der Rastspitze (5) sowie einen Teil des Schaftes (6) des Rastelementes (4) umfasst.

14. Schnappverbindung nach einem der Ansprüche 11 bis 13, **dadurch gekennzeichnet, dass** die Hülse (8) wenigstens zwei Mantelsegmente (22, 22') aufweist, die radial federnd ausgebildet sind.

15. Schnappverbindung nach einem der Ansprüche 11 bis 14, **dadurch gekennzeichnet, dass** die Rastsegmente (21, 21,') des Rastelementes (4) und die Mantelsegmente (22, 22') der Hülse (8) zum vorzugsweise formschlüssigen Eingriff miteinander ausgebildet sind.

16. Schnappverbindung nach einem der Ansprüche 11 bis 15, **dadurch gekennzeichnet, dass** die freien Enden (25, 25') der Rastsegmente (21, 21') des Rastelementes (4) und/oder die freien Enden (24, 24') der Mantelsegmente (22, 22') der Hülse (8) hakenförmig ausgebildet sind.

17. Schnappverbindung nach einem der Ansprüche 11 bis 16, **dadurch gekennzeichnet, dass** die äußere Umfangsfläche der Hülse (8) zum reibbschlüssigen Eingriff mit der Rastaufnahme (7) ausgebildet ist.

18. Schnappverbindung nach einem der Ansprüche 11 bis 17, **dadurch gekennzeichnet, dass** die Rastaufnahme (7) von einer Bohrung im vorzugsweise starren Teil (3) der Schnappverbindung (1), beispielsweise in einer Holz-, einer Metall-, einer Kunststoffplatte oder ähnlichen, gebildet ist.

19. Schnappverbindung nach einem der Ansprüche 11 bis 18, **dadurch gekennzeichnet, dass** die Rastaufnahme (7) als Formrohr (26) ausgebildet ist und wenigstens eine Bohrung (27) und/oder wenigstens eine in Längsrichtung verlaufende Durchtrittsöffnung (28) für ein federndes Rastelement (4) aufweist.
